# EUROPEAN PATENT APPLICATION

(11) **EP 3 739 315 A1**
(43) Date of publication of application: **18.11.2020**
(21) Application number: 19397514.1
(22) Date of filing: 14.05.2019
(51) Int. Cl.: G01L 1/14, G06F 3/044

(54) **A CAPACITIVE TOUCH AND PRESSURE SENSOR**

(71) Applicant: Forciot OY, 33720 Tampere (FI)
(72) Inventor: LIIMATTA, Toni, 33720 TAMPERE (FI); LÄHDESMÄKI, Seppo, 33580 TAMPERE (FI); ALM, Maria, 33950 PIRKKALA (FI)
(74) Representative: Berggren Oy, Tampere

(57) **Abstract**

A method for detecting a pressure and at least one of touch and presence in a vicinity. In the method, a capacitive layered sensor structure (110) comprising an electrically permeable and conductive layer (410), an electrode layer (300) comprising a first electrode (301), and a first insulating layer (210) arranged in between the electrically permeable and conductive layer (410) and the electrode layer (300), the capacitive layered sensor structure (110) comprising or further comprising an insulating layer (210, 220) that is compressible and that is arranged in between the electrode layer (300) and an electrically conductive layer (410, 400) is used. The method comprises measuring a first value (v1) indicative of a first capacitance of the first electrode (301) using the capacitive layered sensor structure (110), measuring a second value (v2) indicative of a second capacitance of the first electrode (301) using the capacitive layered sensor structure (110), and determining that the first value (v1) is at most equal to a first threshold (th_{f}) and at least equal to a second threshold (thₜ) and that the second value (v2) is more than the first threshold (th_{f}). An arrangement (100) comprising the capacitive layered sensor structure (110) and an electronic arrangement (120) that is configured to perform the method. A computer program that, when run on a computer (520), is configured to cause the computer (520) to perform the method.

## Description

### Technical field

The invention relates to sensors for sensing touch and pressure. The invention relates to tactile sensors. The invention relates to pressure sensors. The invention relates to capacitive sensors for sensing touch and pressure. The invention relates to methods for capacitively measuring touch and pressure. The invention relates to computer programs used in connection with measuring touch and pressure.

### Background

Many user interfaces require sensing touch without a pressure and pressure separately. For example a user may move his/her finger on a surface, whereby a touch with the surface indicates a location of the finger. This kind of touch is made substantially without pressing the surface. Moreover, to make a selection, the user may press the surface e.g. by his/her finger. This implies a pressure applied onto the surface. Moreover, from a measured signal, the occurrences of only touch and pressing should be separable. More preferably, the pressure applied should be measurable at least with some accuracy, i.e. better accuracy than a binary application of pressure or not. A capacitive sensor for measuring pressure is known e.g. from the applicant's international publication WO 2018/011464.

Often a sensor for measuring both a touch and a pressure is complex, whereby such a sensor is also expensive. In practice, complexity of such sensors is a hindrance for their wide applicability.

For these reasons, a purpose of the present application is to present a simple sensor arrangement for sensing both touch and pressure. More specifically, to present a simple sensor arrangement for sensing, at a first instance of time, a touch substantially without application of pressure, and at a second instance of time, an application of a pressure. An operating principle of the sensor arrangement is capacitive.

### Summary

As gist of the invention is the use of a capacitive layered sensor structure comprising an electrode layer comprising a first electrode and an electrically permeable and conductive layer. Touch and pressure can be determined from capacitances of the first electrode relative to the surroundings. A first purpose of the electrically permeable and conductive layer, related in particular to the permeability of the layer, is to pass an electric field through the electrically permeable and conductive layer so as to capacitively sense, by the first electrode that is located on a first side of the electrically permeable and conductive layer, an object that is located on a second, opposite, side of the electrically permeable and conductive layer. A second purpose of the electrically permeable and conductive layer, related in particular to the conductivity of the layer, is to form a capacitance in between the electrode and the electrically permeable and conductive layer itself. The capacitive layered sensor structure can be used for such measurements. E.g. an electronic arrangement can be configured to measure a capacitance of the first electrode indicative of a touch (or presence in a vicinity) and another capacitance of the first electrode indicative of a pressure.

A less complex sensor arrangement for the purpose is presented in independent claim 1 of the present application as filed. That sensor arrangement comprises a capacitive layered sensor structure as detailed in the claim 1. Moreover, such a capacitive layered sensor structure can be used to measure both a touch and a pressure as detailed in an independent method claim 13 or the application as filed. Moreover, the method can be run on a computer by running a computer program on a computer. Such a computer program is detailed in claim 16 of application as filed.

### Brief description of the drawings

Figs. 1a to 1d show, in side views, arrangements for capacitively detecting touch and pressure,
Figs. 2a to 2c show, in side views, arrangements for capacitively detecting touch and pressure,
Figs. 3a and 3b show, in a top view, electrode configurations of two sensors,
Figs. 4a1 and 4a2 show, in side views, how touch is sensed by a capacitive layered sensor structure,

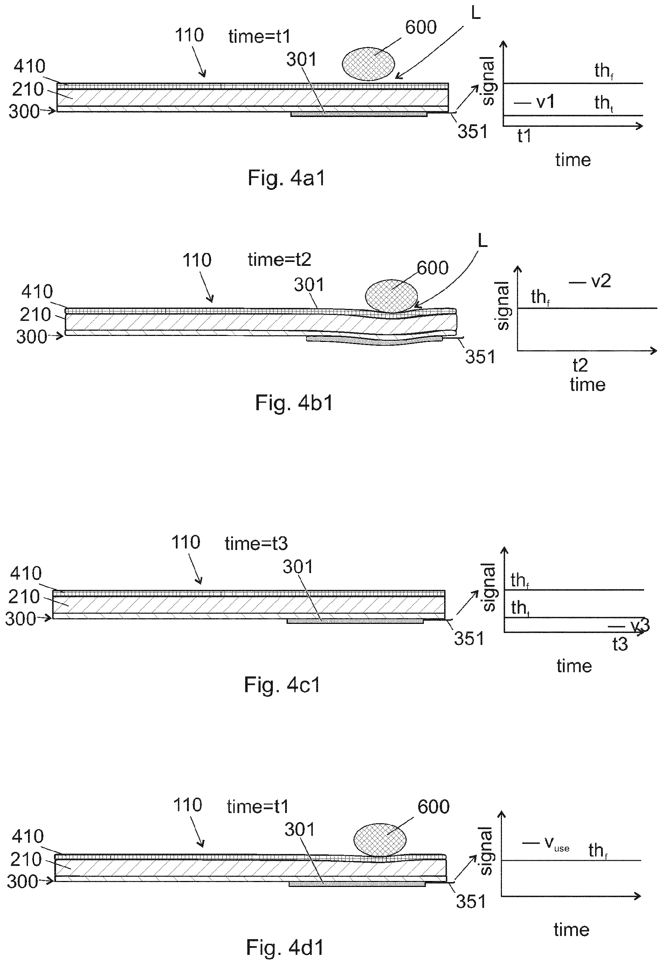

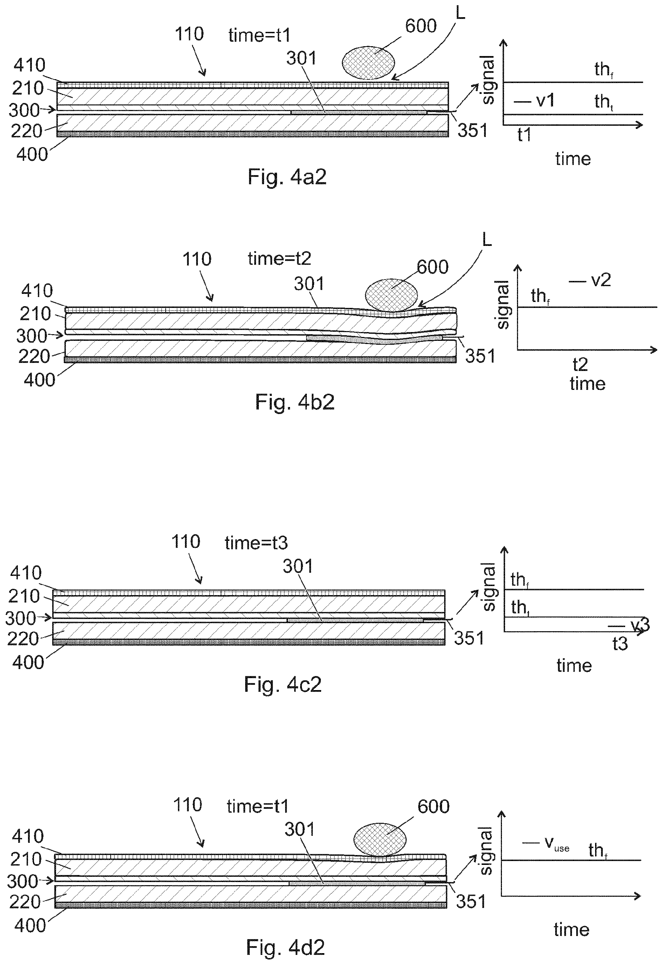

Figs. 4a2 and 4b2 show, in side views, how pressure is sensed by a capacitive layered sensor structure,
Figs. 4c1 and 4c2 show, in side views, how absence of touch and pressure is sensed by a capacitive layered sensor structure,
Figs. 4d1 and 4d2 show, in side views, how a suitable first threshold may be selected,

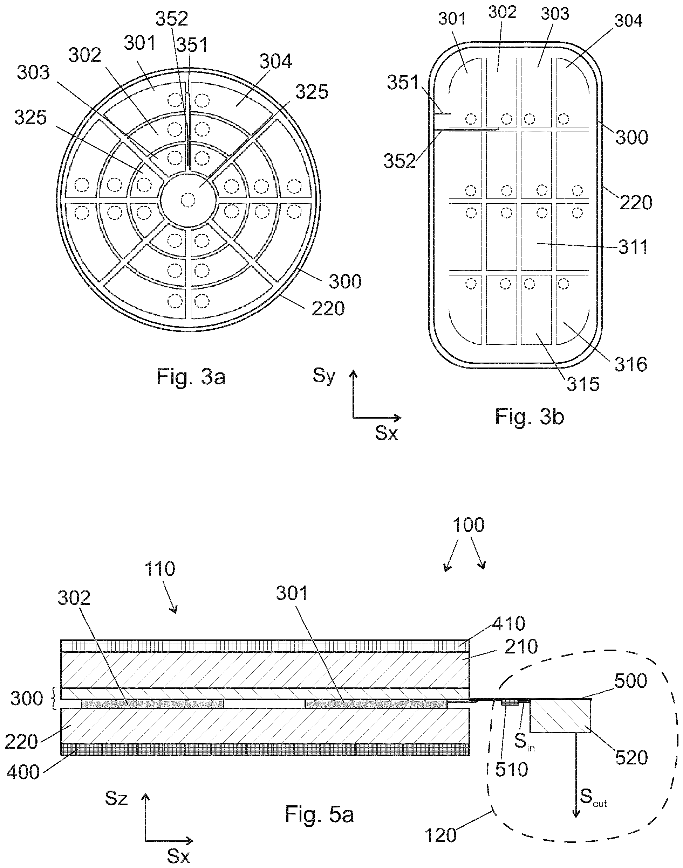

Fig. 5a shows, in a side view, an arrangement for capacitively detecting touch and pressure,

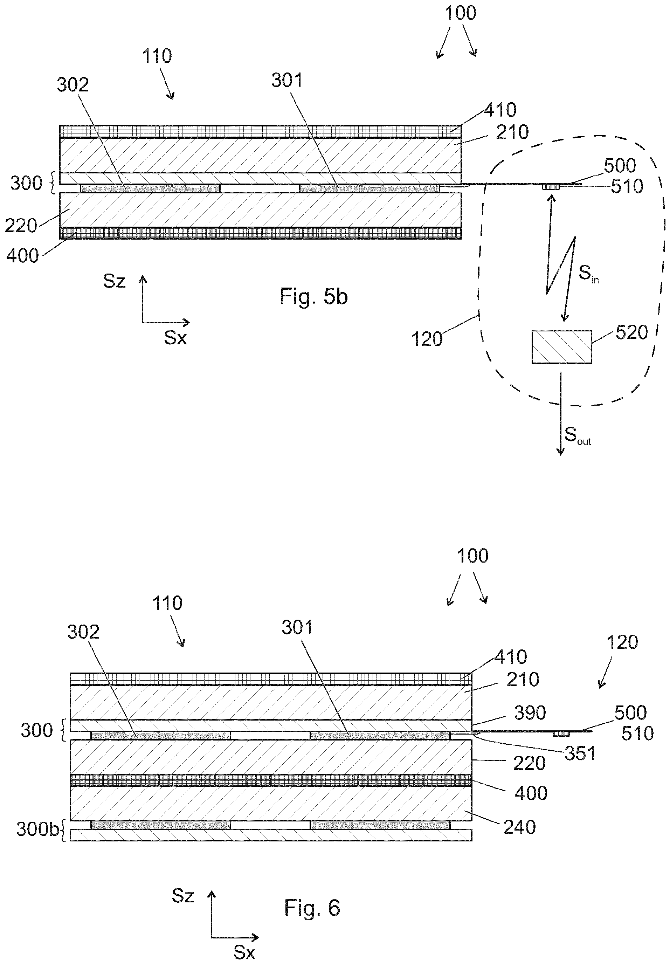

Fig. 5b shows, in a side view, an arrangement for capacitively detecting touch and pressure,
Fig. 6 shows, in a side view, an arrangement for capacitively detecting touch and pressure,

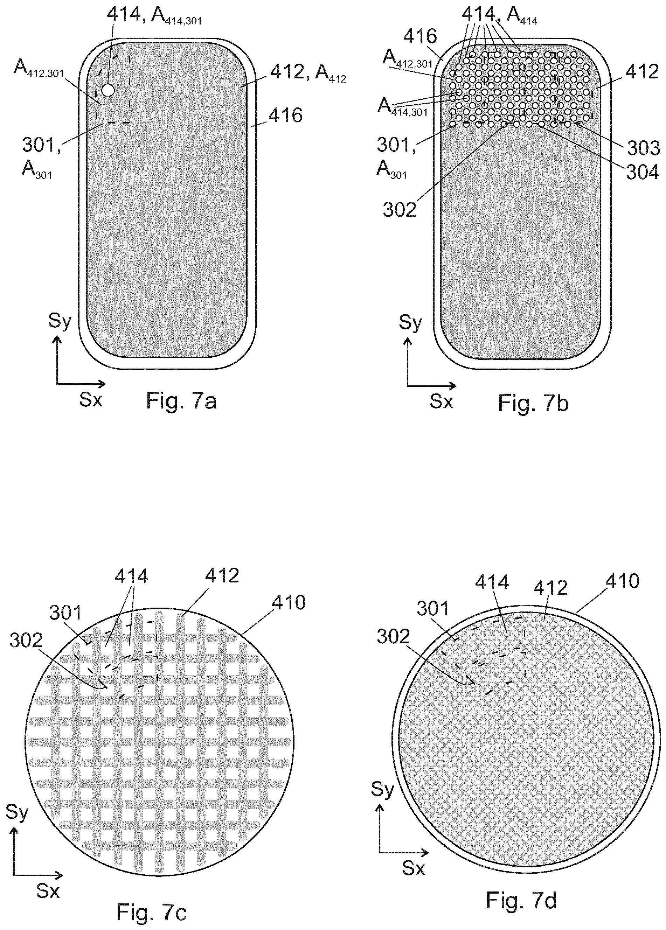

Figs. 7a to 7f show, in top views, electrically permeable and conductive layers of a capacitive layered sensor structure,

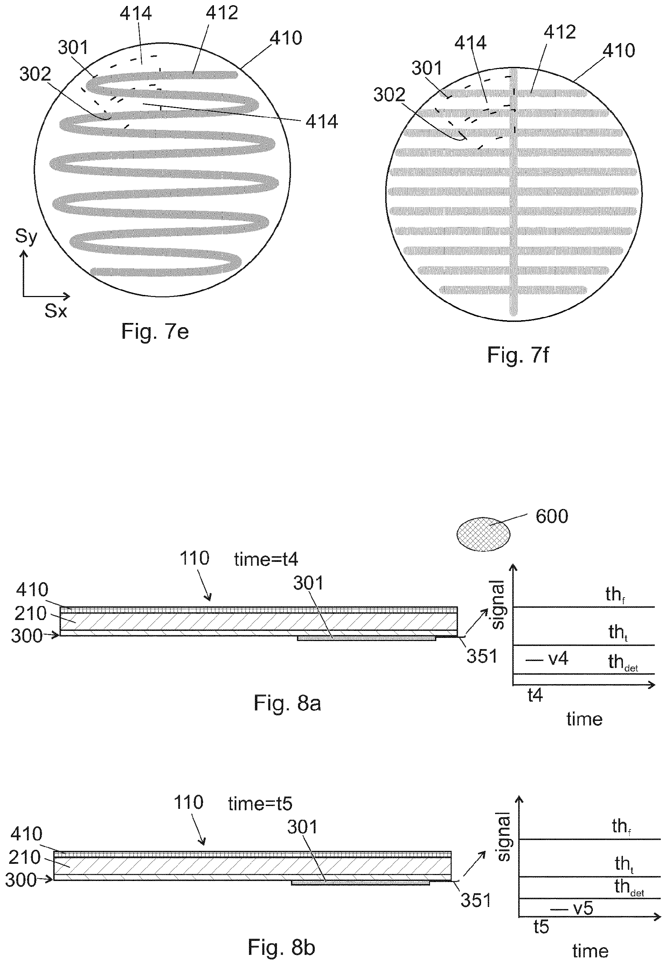

Fig. 8a illustrates a situation, wherein an object is observable by a capacitive layered sensor structure, even if the object is not touching the sensor structure, and
Fig. 8b illustrates a situation, wherein an object is not observable by a capacitive layered sensor structure.

In the figures, the direction Sz indicates a direction of a thickness of the capacitive layered sensor structure. The directions Sx and Sy are perpendicular to each other and to Sz.

### Detailed description

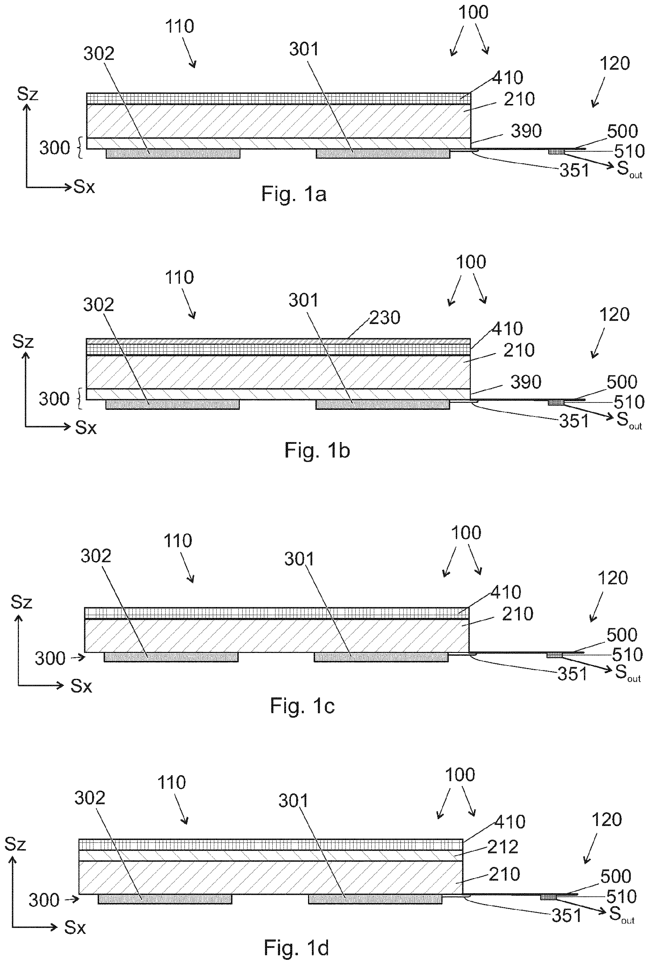

Figure 1a shows, in a side view, an arrangement 100 for capacitively detecting touch at a first time and pressure at a second time. The arrangement 100 comprises a capacitive layered sensor structure 110 (on the left hand side of the Fig. 1a) and an electronic arrangement 120 (on the right hand side of the Fig. 1a). The electronic arrangement 120 is configured to capacitively detect touch at a first time and pressure at a second time by using the capacitive layered sensor structure 110.

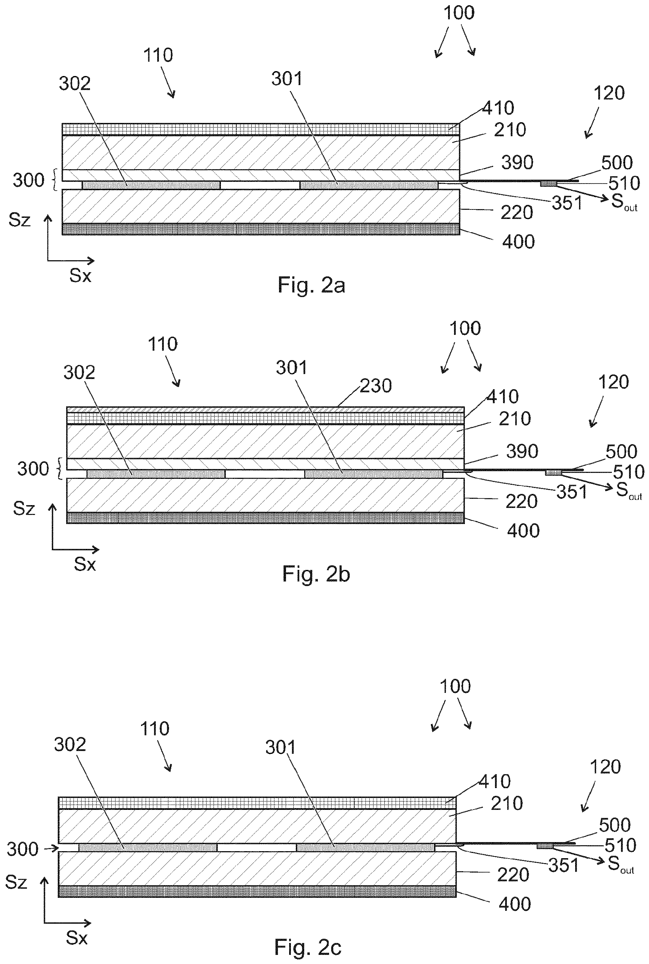

The capacitive layered sensor structure 110 comprises an electrode layer 300 comprising a first electrode 301 and a first wire 351 attached to the first electrode 301. To measure touch or pressure, a capacitance of the first electrode 301 is measured. The capacitance of the first electrode 301 is measured relative to surroundings, e.g. relative to at least the electrically permeable and conductive layer 410. The first wire 351 connects the first electrode to measurement electronics, e.g. the electronic arrangement 120. The electrode layer 300 may comprise a substrate 390 (see Figs. 1a, 1b, 2a, and 2b), onto which the first electrode 301 and the first wire 351 may have been printed. In the alternative, the first electrode 301 may be arranged (e.g. by printing) onto a first insulating layer 210 (as in Fig. 1c) or a second insulating layer 220 (see Fig. 2c). Thus, the first electrode 301 and the first wire 351 may constitute the electrode layer 300; or electrodes and wires may constitute the electrode layer 300; or the electrode layer 300 may further comprise a substrate. As indicated in Figs. 1a and 2a, the electrode layer 300 may comprise a second electrode 302. If the electrode layer 300 comprises the second electrode 302, the second electrode is arranged a distance apart from the first electrode 301. As an example, the second electrode 302 may be arranged at least 0.5 mm apart from the first electrode 301.

As indicated in Fig. 3a, an electrode layer 300 may comprise e.g. twenty-five electrodes. As indicated in Fig. 3b, an electrode layer may comprise e.g. sixteen electrodes. For clarity, Figs. 3a and 3b do not show the layers above the electrode layer 300. A purpose of the electrode layer 300 is to provide the electrode(s) of the capacitive layered sensor structure 110. Circles shown on the electrodes in Figs. 3a and 3b indicate examples of locations for wires, if wires are connected to the electrodes by conductive adhesive. As an alternative, wires may be arranged (e.g. printed) directly on the same substrate as the electrodes.

Referring to Figs. 1a to 1c, the capacitive layered sensor structure 110 comprises a first insulating layer 210. The first insulating layer 210 is arranged in between the electrode layer 300 and an electrically permeable and conductive layer 410 in the direction Sz of the thickness of the capacitive layered sensor structure 110.

As for the direction Sz of thickness of the capacitive layered sensor structure 110, Sz may refer to the direction of the thickness of a planar capacitive layered sensor structure 110. The structure 110 is preferably deformable. Therefore, in use, the structure 110 needs not to be planar. However, a nonplanar sensor structure 110 may be deformable to a planar shape. In nonplanar structures, the direction Sz of the thickness of the structure depends on the point of observation. Moreover, the term thickness of a planar structure refers to the smallest of three orthogonal dimensions of the planar structure.

A first purpose of the of the first insulating layer 210 is to electrically insulate the electrode(s) 301, 302, from the electrically permeable and conductive layer 410 in order to form a capacitance in between the first electrode 301 and the electrically permeable and conductive layer 410. The capacitive layered sensor structure 110 may comprise a second insulating layer 220 arranged such that the electrode layer 300 is arranged in between the first 210 and second 220 insulating layers in the direction of thickness of the thickness of the capacitive layered sensor structure 110. A second purpose of the first insulating layer 210 and the second insulating layer 220, in combination, is to act as a compressible layer (or as compressible layers), i.e. a layer that is deformed by application of pressure. As known e.g. from the prior art publication mentioned above, a change in a distance between the first electrode 301 and another conductor (e.g. layer 400, 410) changes the capacitance therein between. For this functionality, it suffices that only one of the insulating layers 210, 220 is compressible, however, both of them may be compressible. Therefore, at least one of the first insulating layer 210 and the second insulating layer 220 is compressible. In other words, at least one of the first insulating layer 210 and the second insulating layer 220 is configured to be compressed and deform by such a pressure that is to be detected by the capacitive layered sensor structure 110.

Thus, in an embodiment, the first insulating layer 210 is compressible. In another or the same embodiment, the capacitive layered sensor structure 110 comprises a second insulating layer 220 that is compressible. In an embodiment, the first insulating layer 210 is not compressible and the capacitive layered sensor structure 110 comprises a second insulating layer 220 that is compressible. In an embodiment, the first insulating layer 210 is compressible and the capacitive layered sensor structure 110 comprises a second insulating layer 220 that is compressible. In an embodiment, the first insulating layer 210 is compressible and the capacitive layered sensor structure 110 comprises a second insulating layer 220 that is not compressible. In an embodiment, sensor structure 110 does not comprise the second insulating layer 220. The insulating layer that is compressible (i.e. deformable) is arranged in between the electrode layer 300 and an electrically conductive layer. The first insulating layer is arranged in between the layers 300 and 410; while the second insulating layer 220, if present, is arranged in between the layers 300 and 400. In this way, the capacitive layered sensor structure comprises an insulating layer (210, 220) that is compressible and that is arranged in between the electrode layer 300 and an electrically conductive layer (410, 400). The electrically conductive layer (410, 400) may be electrically permeable.

As indicated in Fig. 1d, also the conductive parts of the electrically permeable and conductive layer 410 may be printed onto a substrate 212. In such a case, also the substrate 212 may be arranged in between the electrically permeable and conductive layer 410 and the electrode layer 300 in the direction of thickness Sz. However, if a substrate 212 is used, it may be used to cover the electrically permeable and conductive layer 410, i.e. it may be used as the third insulating layer 230 of Fig. 1b.

If the electrode layer 300 comprises the substrate 390, as in Figs. 1a and 1b, the first electrode 301 may be arranged in between the substrate 390 and the first insulating layer 210 in the direction of thickness Sz (not shown).

The capacitive layered sensor structure 110 comprises the electrically permeable and conductive layer 410. A first purpose of the electrically permeable and conductive layer 410, related in particular to the permeability of the layer 410, is to pass an electric field through the electrically permeable and conductive layer 410 so as to capacitively sense, by the first electrode 301, which is located on a first side of the electrically permeable and conductive layer 410, an object (e.g. 600, see Fig. 3a) that is located on a second, opposite, side of the electrically permeable and conductive layer 410. A second purpose of the electrically permeable and conductive layer 410, related in particular to the conductivity of the layer 410, is to form a capacitance in between the electrode and the electrically permeable and conductive layer itself.

The electrically permeable and conductive layer 410 increases the capacitance of the first electrode when compared to situation without layer 410, but reduces the amount of capacitance that a touch event is able to generate. Thus, a purpose of the electrically permeable and conductive layer 410 is to reduce the capacitance that a touch event generates. It has been noticed that without the electrically permeable and conductive layer 410 a touch could generate so large signals that it could be even greater than a small pressure. It is noted that a touch or a pressure may be made e.g. by a finger or by a whole hand, which affects the magnitude of the observed signal. Thus, a pressure with a finger could, without the electrically permeable and conductive layer 410, imply a similar signal as a touch with a whole hand. Therefore, for purposes of reliably distinguishing touch and pressure, the electrically permeable and conductive layer 410 is applied. In particular, the electrically conductive property of the layer 410 reduces the signal level generated by a touch.

Moreover, it has been noticed that without the electrical permeability of the layer 410, a layer that is only conducting would reduce the effect of touch to such a degree that touch could not be measured at all. The electrical permeability of the layer 410 has the effect that the touch affects the capacitance of the first electrode 301. Thus, even if a purpose of the electrically permeable and conductive layer is to reduce the capacitance of the first electrode when touch is to be measured, a purpose is to reduce the capacitance only to a measurable level; i.e. not completely remove an effect of the touch on the capacitance.

With reference to Figs. 4a1, 4b1, and 4d1, the pressure and touch by an object 600 are sensed in such a case that a part of the first insulating layer 210 and a part of the electrically permeable and conductive layer 410 are arranged in between the object 600 and the first electrode 301. This applies also in Figs. 4a2, 4b2, and 4d2.

Referring to Figs. 1a to 1c, as well as to 2a to 2c, the arrangement 100 for capacitively detecting touch and pressure further comprises an electronic arrangement 120. The electronic arrangement 120 is electrically coupled to the first electrode 301 in order to measure the capacitance of the first electrode 301. The electronic arrangement 120 is coupled to the first electrode 301 via the first wire 351. The first wire 351 may be seen as part of the electronic arrangement 120 or as part of the capacitive layered sensor structure 110. In such a case, the first wire 351 of the electronic arrangement 120 is electrically coupled to the first electrode 301.

Referring to Figs. 2a to 2c, in an embodiment, the capacitive layered sensor structure 110 comprises a second insulating layer 220. In such an embodiment, the electrode layer 300 is arranged in between the first insulating layer 210 and the second insulating layer 220 in the direction Sz of the thickness of the capacitive layered sensor structure 110. As indicated above, in such an embodiment, at least one of the insulating layers 210, 220 is compressible. Even if not shown in Figs. 2a to 2c, also in embodiments comprising the second insulating layer, the electrically permeable and conductive layer 410 may be made onto a substrate 212 or comprise a substrate 212 as discussed above in connection with Fig. 1d.

A purpose of the of the second insulating layer 220 is to electrically insulate the electrode(s) 301, 302 from environment. Electrical contacts to the electrodes in use might cause malfunction of the sensor arrangement 100. Moreover, when the sensor structure comprises a first electrically conductive layer 400, a purpose of the second insulating layer 220 is to insulate the electrode(s) 301, 302 from the first electrically conductive layer 400 and in this way form a capacitance in between the first electrode 301 and the first electrically conductive layer 400. As indicated above, a purpose of the second insulating layer 220 may be to act as the compressible layer or as one of the compressible layers, i.e. as a layer that is deformed by application of pressure.

As indicated by these functions, even if not shown in the Figures, the capacitive layered sensor structure 110 may comprise the second insulating layer 220 even if it does not comprise the first electrically conductive layer 400.

With reference to Figs. 1b and 2b, in an embodiment, the capacitive layered sensor structure 110 comprises a third insulating layer 230. In such a case, the electrically permeable and conductive layer 410 is arranged in between the third insulating layer 230 and the first insulating layer 210. A purpose of the third insulating layer 230 is to insulate the electrically permeable and conductive layer 410 from the object 600, of which touch or pressure is sensed. This improves the sensitivity of the arrangement 100. As indicated in Fig. 1b, the capacitive layered sensor structure 110 may comprise the third insulating layer 230 even if it does not comprise the second insulating layer 220. As indicated in Fig. 2a, the capacitive layered sensor structure 110 may comprise the second insulating layer 220 even if it does not comprise the third insulating layer 230. As indicated above, the third insulating layer 230 may be a substrate 212 of the conductive parts of the layer 410. A substrate 212, if used at all, may also be arranged on the other side of the layer 410 (see Fig. 1d). In such a case a third insulating layer 230 may be applied even if not shown in Fig. 1d. The conductive parts of the layer 410 may be directly printed on the first insulating layer 210. Thus the layer 210 (or layers 210, 212, 390) in between the electrically permeable and conductive layer 410 and the first electrode layer 300 may comprise multiple materials e.g. layers of different material. At least one of the materials is dielectric (i.e. electrically resistive); preferably all the materials are dielectric.

The different layers may be attached to each other with adhesive as known per se. However, for clarity, adhesive is not shown in the figures.

In an embodiment, the electronic arrangement 120 is electrically coupled to the electrically permeable and conductive layer 410 in order to measure the capacitance of the first electrode 301 relative to the electrically permeable and conductive layer 410. A common potential, e.g. a ground potential, may be conducted to the electrically permeable and conductive layer 410 at least when measuring the capacitance of the first electrode 301 relative to the layer 410. However, the electronic arrangement 120 need not be electrically coupled to the electrically permeable and conductive layer 410. A capacitance that depends on the degree of deformation can be formed in between the first electrode 301 and a first electrically conductive layer 400 (see Figs. 2a to 2c) for measuring pressure, when the electronic arrangement 120 is not electrically coupled to the electrically permeable and conductive layer 410.

Referring to Figs. 4a1 and 4a2, the electronic arrangement 120 is configured to, at a first instance of time t1, measure a first value v1 indicative of a first capacitance of the first electrode 301. Moreover, the electronic arrangement 120 is configured to determine that the first value v1 is at most equal to a first threshold th_{f}. As indicated above and in Figs. 4a1 and 4a2, when (i) only touch of an object 600, or (ii) such a small pressure that is classifiable as being indicative of touch (the pressure being generated by the object 600), or (iii) the presence of the object 600 in a vicinity of the first electrode 301 is being measured, a value v1 of a signal measurable from the first electrode 301 is reasonable small, i.e. at most equal to a first threshold th_{f}. This is in contrast to measuring pressure (or a higher pressure), which results in a greater value of the signal. Thus, the first value v1 being at most equal to the first threshold th_{f} is indicative of an object not pressing (not at all or not hard) the layered sensor structure 110 (i.e. touching). The value may be a value of a voltage or a current, if the capacitance of the first electrode is sent as an analogue signal. In the alternative, the value may be a digital value of the capacitance.

However, since the touch of an object 600, or such a small pressure that is classifiable as being indicative of touch (the pressure being generated by the object 600), or the presence of the object 600 in a vicinity of the first electrode 301 is being measured, the signal is somewhat higher than in case nothing is measurable. In particular, in such a case, the value v1 measurable from the first electrode 301 is at least equal to a second threshold tht. The second threshold can be called a touch limit. Such a touch limit (i.e. second threshold) can be used to differentiate a touch (as in Fig. 4a1 or 4a2) from the absence of the object 600 (Fig. 4c1 or 4c2). The first value v1 being at least equal to a second threshold tht is indicative of an object being present (i.e. touching). As indicated above the term "touch" may therefore refer to the three cases:
- a contact of an object 600 with the layered sensor structure 110 without any pressure being applied, or
- such a small pressure that is classifiable as being indicative of touch (the pressure being generated by the object 600), or
- the presence of the object 600 in a vicinity of the first electrode 301 without a physical contact in between the object 600 and the layered sensor structure 110.

Determining that the first value v1 is at most equal to the first threshold th_{f} and at least equal to the second threshold tht may take place at the first time t1, or the determining may take place later, e.g. in a computer. However, preferably, determining that the first value v1 is at most equal to the first threshold th_{f} and at least equal to the second threshold tht takes place when the object 600 is touching (or mildly pressing) the capacitive layered sensor structure 110, as indicated in Figs. 4a1 and 4a2.

Referring to Figs. 4b1 and 4b2, the electronic arrangement 120 is configured to, at a second instance of time t2, measure a second value v2 indicative of a second capacitance of the first electrode 301. Moreover, the electronic arrangement 120 is configured to determine that the second value v2 is more than the first threshold th_{f}. As indicated above, such large values are indicative of a pressure (possibly reasonable high pressure) being applied at a surface of the sensor structure 110 at a location L that overlaps with the first electrode 301.

Determining that the second value v2 is more than the first threshold th_{f} may take place at the second time t2, or the determining may take place later, e.g. in a computer. However, preferably, determining that the second value v2 is more than the first threshold th_{f} takes place when the object 600 is pressing the capacitive layered sensor structure 110, as indicated in Figs. 4b1 and 4b2.

As detailed above, in this way, the first value v1 is indicative of a touch (or being in a vicinity or a mild pressure) and the second value v2 is indicative of application of a pressure (e.g. a higher pressure).

Referring to Figs. 2a to 2c and 4a2, 4b2, 4c2, and 4d2, preferably, the capacitive layered sensor structure 110 comprises a first electrically conductive layer 400. In such a case, the second insulating layer 220 is arranged in between the first electrically conductive layer 400 and the electrode layer 300, to insulate the electrode layer 300 from the first electrically conductive layer 400. A purpose of the first electrically conductive layer 400 is to reduce disturbances measurable by the first electrode 301. Since the determination of both a touch and a pressure requires a reasonably accurate result, reduction of disturbances, and hence the presence of the first electrically conductive layer 400, is preferable.

The first electrically conductive layer 400 need not be electrically permeable, since, in general, touch is not sensed from the other side of the capacitive layered sensor structure 110. However, at least in case touch should be sensed from both sides, also the first electrically conductive layer 400 could be made also electrically permeable. For manufacturing reasons, the first electrically conductive layer 400 may be electrically permeable even if touch is not sensed from the other side.

When the capacitive layered sensor structure 110 comprises the first electrically conductive layer 400, the electronic arrangement 120 may be electrically coupled also to the first electrically conductive layer 400 in order to measure the capacitance of the first electrode 301 relative to the first electrically conductive layer 400. As indicated above, measuring in particular the capacitance of the first electrode 301 relative to the first electrically conductive layer 400 improves accuracy. A common potential, e.g. a ground potential, may be conducted to both the first electrically conductive layer 400 and the electrically permeable and conductive layer 410 at least when measuring the capacitance of the first electrode 301 relative to the layers 400, 410.

When the capacitive layered sensor structure 110 comprises the first electrically conductive layer 400, the electronic arrangement 120 may be, but need not be, coupled to the first electrically conductive layer 400. If coupled, a capacitance in between the first electrode 301 and the first electrically conductive layer 400 may be formed. If not coupled, the first electrically conductive layer 400 acts mainly as a shield to reduce disturbances.

The electronic arrangement 120 may be configured to send an output signal Sₒᵤₜ. In an embodiment, the output signal Sₒᵤₜ is indicative of
- the first value v1 being at most equal to the first threshold th_{f},
- the first value v1 being at least equal to the second threshold tht, and
- the second value v2 being more than the first threshold th_{f}.

In many applications it may be feasible to have information also about the value of the pressure applied on the first electrode 301, not just the information that a pressure is applied. Therefore, in an embodiment, the output signal Sₒᵤₜ is indicative of the second value v2.

As indicated above, both touch and pressure can be measured using the capacitive layered sensor structure 110. When using the capacitive layered sensor structure 110 as indicated above, a method for detecting a touch and a pressure is performed. Such a method for detecting a touch and a pressure comprises arranging available a capacitive layered sensor structure 110, of which details have been given above.

Referring to Figs. 4a1 and 4a2, in an embodiment, the method comprises, at least at a first time t1, when an object 600 having a volume of at least 1 (cm)³ and a dielectric constant of at least 10 is arranged in the vicinity of the first electrode 301 or touches a surface of the capacitive layered sensor structure 110 at such a location L that overlaps with the first electrode 301 such that a part of the first insulating layer 210 and a part of the electrically permeable and conductive layer 410 are arranged in between the object 600 and the first electrode 301, and when a pressure is not applied on the first insulating layer 210 or at most a mild pressure is applied on the first insulating layer, measuring a first value v1 indicative of a first capacitance of the first electrode 301 using the capacitive layered sensor structure 110. This may take place at the first time t1, as discussed above and indicated in Fig. 4a2. The embodiment further comprises determining that the first value v1 is at most equal to a first threshold th_{f} and at least equal to a second threshold tht.

The size of the object 600, as detailed above, corresponds a reasonable small finger of a typical user. The dielectric constant of the object 600, as detailed above, corresponds to a dielectric constant of a part of a finger.

An embodiment of the method comprises, at least at a second time t2, when the object 600 is compressing at least one of the first and the second insulating layers 210, 220 at such a location that overlaps with the first electrode 301 such that a part of the first insulating layer 210 and a part of the electrically permeable and conductive layer 410 are arranged in between the object 600 and the first electrode 301, measuring a second value v2 indicative of a second capacitance of the first electrode 301 using the capacitive layered sensor structure 110. This may take place at the second time t2, as discussed above and indicated in Figs. 4b1 and 4b2. The embodiment further comprises determining that the second value v2 is more than the first threshold th_{f}. As detailed below, some small pressures may be classified as touch. Thus, at some other point of time (not shown), the object 600 may be mildly compressing at least one of the first and the second insulating layers 210, 220 and the resulting capacitance may remain below first threshold th_{f}.

This method may be reflected in the arrangement 100. In particular, in an embodiment of the arrangement 100, the capacitive layered sensor structure 110 and the electronic arrangement 120 are, in combination, configured in the following way:
[A] when the object 600 having a volume of at least 1 (cm)³ and a dielectric constant of at least 10 is arranged in the vicinity of the first electrode 301 or touches a surface of the capacitive layered structure at such a location L that overlaps with the first electrode 301 such that a part of the first insulating layer 210 and a part of the electrically permeable and conductive layer 410 are arranged in between the object 600 and the first electrode 301, and when neither the first insulating layer 210 nor the second insulating layer 220 is compressed, a value v1 indicative of the capacitance of the first electrode 301 as measurable from the capacitive layered sensor structure 110 by the electronic arrangement 120 is at most equal to the first threshold th_{f} and at least equal to the second threshold th_{t.} Moreover,
[B] at least one of the first insulating layer 210 and the second insulating layer 220 is compressible by the object 600 at such a location L that overlaps with the first electrode such that a part of the first insulating layer 210 and a part of the electrically permeable and conductive layer 410 are arranged in between the object 600 and the first electrode 301, in such a way that a value indicative of the capacitance of the first electrode 301 as measurable from the capacitive layered sensor structure 110 by the electronic arrangement 120 is more than the first threshold th_{f}. It is also noted that all compressions need not imply a capacitance above the first threshold th_{f}, but at least a sufficiently high compression will result in the exceeding the first threshold.

As for the features [A] and [B] hereinabove, naturally the arrangement 100 does not necessarily measure these values at all times. But if, in the situations indicated in Figs. 4a2 and 4b2, the value indicative of the capacitance would be measured by the electronic arrangement 120, its magnitude would be as described above.

Examples of properties of the object 600 will be discussed below in connection with the method.

As indicated above and in Figs. 4a2 and 4b2, touching (as opposed to pressing) can be determined from a reasonably small value of the signal. In addition and with reference to Figs. 4a2 and 4c2, touching (as opposed to absence of both touching and pressing) can be determined from a reasonably large value of the signal. The reasonably large value may be e.g. larger than typical noise. Typically measurement results include noise. This is particularly true in capacitive measurements, since they are sensitive to disturbances in the measurement environment.

Referring to Figs. 4c1 and 4c2, typically measurements are made also when no object 600 is touching or compressing the capacitive layered sensor structure 110, in order to determine whether there is such an object 600 or not. Thus, an embodiment of the method comprises, when an object 600 having a volume of at least 1 (cm)³ and a dielectric constant of at least 10 is not arranged in the vicinity of the first electrode 301, measuring a third value v3 of a third capacitance of the first electrode 301. The method further comprises determining that the third value v3 is less than the second threshold tht.

The meaning of the term "vicinity" may dependent on the user needs. In some measurements, a lack of touching may be determined, e.g. when the object 600 is not closer than 15 cm to the electrode. However, in some other measurements, a lack of touching may be determined, e.g. when the object 600 is not closer than 1 cm to the electrode. The value of the second threshold tht can be used to define the meaning vicinity. It may be useful to define the second threshold tht in such a way that when a distance between the object 600 and the first electrode 301 is less than a one dimensional size (e.g. length or width) of the first electrode 301, the resulting signal is at least equal to the second threshold tht. As an example, an object 600 having a volume of at least 1 (cm)³ and a dielectric constant of at least 10 is not arranged in the vicinity of the first electrode 301, when no object 600 having a volume of at least 1 (cm)³ and a dielectric constant of at least 10 is arranged closer than 3 cm (or another distance discussed above, depending on needs) to such a part of a surface of the capacitive layered sensor structure 110 that overlaps with the first electrode 301. Herein the term overlaps means that the overlapping parts are on top of each other in the direction Sz of thickness of the capacitive layered sensor structure 110. Correspondingly, for purposes of definition, an object 600 having a volume of at least 1 (cm)³ and a dielectric constant of at least 10 is arranged in the vicinity of the first electrode 301, when the object 600 having a volume of at least 1 (cm)³ and a dielectric constant of at least 10 is arranged at most 3 cm (or another distance discussed above, depending on needs) apart from such a part of a surface of the capacitive layered sensor structure 110 that overlaps with the first electrode 301 (i.e. the location L).

In an embodiment of the arrangement 100, the capacitive layered sensor structure 110 and the electronic arrangement 120 are, in combination, configured to function in a corresponding manner. This manner is discussed above for the object 600, and the aforementioned properties of the object 600 are also applicable for the capacitive sensor structure discussed above.

Correspondingly, in an embodiment of the arrangement 100, the electronic arrangement 120 is configured, at a third instance of time t3, measure a third value v3 indicative of a third capacitance of the first electrode 301 and determine that the third value t3 is below the second threshold tht. In this way, the third value v3 is indicative of absence of both a touch and an application of a pressure. This has been indicated in Figs. 4c1 and 4c2 as well as in Figs. 8a and 8b.

To summarize the situations indicated in Figs. 4a1 to 4d2 and 8a and 8b the following is noted:
- (i) when a pressure is applied by the object 600 at the location L (see above and Figs. 4a1, 4b1, 4a2, 4b2) a value of the signal is more than the second threshold tht, and may be more than the first threshold th_{f}.
- (ii) when a pressure is not applied by the object 600 (see Figs. 4c1, 4c2, 8a, 8b), a value of the signal is at most equal to the first threshold th_{f}, and may be more than the second threshold tht.

To further clarify the situation (i) the following is noted:
- (i,a) when a large pressure is applied by the object 600 at the location L (see above and Figs. 4a1, 4b1, 4a2, 4b2) a value of the signal is more than the first threshold th_{f} and
- (i,b) even if a small, but a positive and non-zero, pressure is applied by the object 600 at the location L (see above and Figs. 4a1, 4b1, 4a2, 4b2) a value of the signal may be less first threshold th_{f}.

In this way, the actual value of the first threshold th_{f} may be used to fine-tune the pressure required for determining a pressure. Referring to the point (i,b), depending on the application, it may be feasible that very small (but greater than zero) pressures are indicative of a touch rather than a pressure. However, referring to the point (i,a) above, at least one of the first and second insulating layers 210, 220 is compressible by the object 600 such that a value indicative of the capacitance of the first electrode 301 as measurable from the capacitive layered sensor structure 110 by the electronic arrangement 120 is more than the first threshold th_{f}, when the structure 110 is compressed as indicated in the point (i,a). A reasonable large force may be needed for the value indicative of the capacitance of the first electrode 301 to exceed the first threshold th_{f}, depending on the value of the first threshold th_{f}.

To further clarify the situation (ii) the following is noted:
- (ii,a) when a pressure is not applied by the object 600 (see Figs. 4c1, 4c2, 8a, 8b), but the object 600 touches the capacitive layered structure at the location L or is in a vicinity thereof, a value of the signal is at most equal to the first threshold th_{f} and at least equal to the second threshold thₜ and
- (ii,b) when the object 600 is far away from the first electrode (i.e. neither touching, nor in the vicinity; see Figs. 4c1, 4c2, 8a, and 8b), a value of the signal is less than the second threshold tht.

In this way, the actual value of the second threshold tht may be used to fine-tune the distance required for determining a touch. Depending on the application, it may be feasible that only very small distances are considered to indicate a touch; however, in some applications presence in a vicinity may be indicative of a touch.

With reference to Figs. 8a and 8b, when the signal is below the second threshold tht, there are at least two options. First, as indicated in Fig. 8a, a fourth value v4 indicative of the capacitance of the first electrode, which fourth value v4 is less than the second threshold tht, may be greater than a detection limit th_{det}. In this case the signal is indicative that an object 600 is within a detectable distance from the first electrode 301, however, not in a vicinity of the first electrode 301. Second, as indicated in Fig. 8b, a fifth value v5 indicative of the capacitance of the first electrode 301, which fifth value v5 is less than the second threshold tht, may be less than a detection limit th_{det}. In this case the signal is indicative that nothing is within a detectable distance from the first electrode 301. The detection limit th_{det} is related to noise levels within the measurements, as detailed below.

Thus, to further clarify the situation (ii,b) as indicated above, the following is noted:
- (ii,b,1) when the object 600 is only reasonably far away from the first electrode 301, however, neither touching, nor in the vicinity; see Fig. 8a, a value v4 of the signal may be determinable, i.e. distinguishable from noise and thus more than a detection limit th_{det}.
- (ii,b,2) when the object 600 is very far away from the first electrode 301, see Fig. 8b, a value v5 of the signal is indistinguishable from noise and thus less than a detection limit th_{det}.

Thus, in an embodiment, the electronic arrangement 120 is configured to
- at a fourth instance of time t4, measure a fourth value v4 indicative of a fourth capacitance of the first electrode 301, and
- determine that the fourth value v4 is more than a detection limit th_{det} and less than the second threshold tht.

A corresponding embodiment of the method comprises
- at a fourth instance of time t4, measuring a fourth value v4 indicative of a fourth capacitance of the first electrode 301, and
- determining that the fourth value v4 is more than a detection limit th_{det} and less than the second threshold tht.

Moreover, in an embodiment, the electronic arrangement 120 is configured to
- at a fifth instance of time t5, measure a fifth value v5 indicative of a fifth capacitance of the first electrode 301, and determine that the fifth value v5 is less than the detection limit th_{det}.

A corresponding embodiment of the method comprises
- at a fifth instance of time t5, measuring a fifth value v5 indicative of a fifth capacitance of the first electrode 301, and
- determining that the fifth value v5 is less than the detection limit th_{det}.

As indicated above, the touch can be differentiated from the pressing by using a proper electrically permeable and conductive layer 410 and a proper first threshold th_{f}, in combination. If the first threshold th_{f}, is too large, information related to the value of the pressure is lost. If the first threshold th_{f}, is too small, some touch, even without pressing, could be incorrectly determined as being indicative of application of pressure. These situations, however, depend on the use of the sensor arrangement 100. A typical use is a user interface, wherein a user operates the sensor arrangement 100 by a finger or fingers. Pressure in such an application is typically some hundreds of grams per square centimetre (i.e. some tens of kPa). Therefore, in an embodiment, the sensor arrangement 100 is configured such that when at least one of the first insulating layer 210 and the second insulating layer 220 is compressed by the object 600 having a volume of at least 1 (cm)³ and a dielectric constant of at least 10 with a pressure of 10 kPa such that a part of the first insulating layer 210 and a part of the electrically permeable and conductive layer 410 are arranged in between the object 600 and the first electrode 301, a value indicative of the capacitance of the first electrode 301 as measurable from the capacitive layered sensor structure 110 by the electronic arrangement 120 equals a use value vᵤₛₑ. Such a use value vᵤₛₑ is shown in Figs. 4d1 and 4d2. This value corresponds to a typical value indicative of the capacitance, when a pressure is applied to the capacitive layered sensor structure 110, the value being measurable by the electronic arrangement 120. In order for meaningful pressure data to be measurable, in an embodiment, the first threshold th_{f} is at most 95 % of the use value vᵤₛₑ. More preferably, the first threshold th_{f} is at most 75 % of the use value vᵤₛₑ, such as at most 50 % of the use value vᵤₛₑ.

As indicated above, the touch can be differentiated from absence of touching and pressing by using a proper electrically permeable and conductive layer 410 and a proper second threshold tht, in combination. If the second threshold tht, is too large, some forms of touch are not necessarily identified. If the first threshold th_{f}, is too small, incorrect indication of a touch may be measured.

Moreover, typically measurements include noise. Therefore, even if there is not object 600 in a vicinity of the first sensor 301, a signal measured therefrom is not constant. Thus, the signal measured in such case has a mean (<v>) and a deviation (stdᵥ). In order not to make meaningless measurement, a detection limit th_{det} may be set to a value equalling the mean added by the deviation (i.e. th_{det} = <v> + stdᵥ); or to a value equalling the mean added by two deviations (i.e. th_{det} = <v> + 2×stdᵥ). Thus, all signal values that are less than the detection limit th_{det} may be considered meaningless.

For completeness it is noted that the detection limit th_{det} is at most equal to the second threshold tht. Typically, the detection limit th_{det} is less than the second threshold thₜ. Moreover, the second threshold thₜ is less than the first threshold th_{f}. Preferably, the second threshold tht is less than the first threshold th_{f} by at least a noise level stdᵥ (discussed in detail above), i.e. preferably, tht < th_{f} - stdᵥ. The first threshold th_{f} may correspond to a situation wherein the compressible layer (210 and/or 220) is compressed to some extent. The first threshold th_{f} may correspond to a situation wherein the compressible layer (210 and/or 220) is fully compressed. In such an extreme case, the presence of pressure would be determined only when the compressible layer (210 and/or 220) is fully compressed, and other compressions would be classified as a touch.

As for the second threshold (i.e. touch limit) tht, what has been said above about the object 600 and the vicinity, applies.

Referring to Fig. 1a, 1b, 1c, 1d, 2a, 2b, 2c, 5a and 5b, in an embodiment of the arrangement 100, the electronic arrangement 120 is configured to send an output signal Sₒᵤₜ, wherein the output signal Sₒᵤₜ is indicative of [i] the first value v1 being in between the second threshold tht and the first threshold th_{f}, and [ii] the second value v2 being above the first threshold th_{f}. Preferably the output signal Sₒᵤₜ is also indicative of the second value v2 itself. As indicated in these figures, multiple implementations of the sensor arrangement 100 are possible.

As indicated in Figs. 1a, 2a, and 5a, the electronic arrangement 120 may be an integral part of the arrangement 100 for capacitively detecting touch and pressure. The electronic arrangement 120 may perform the measurements as indicated above, and send an output signal Sₒᵤₜ indicative of the first value v1 being in between the second threshold tht and the first threshold th_{f}, and of the second value v2 being above the first threshold th_{f}. As indicated above, preferably the output signal is indicative of the second value v2. The output signal Sₒᵤₜ may be used according to needs. As indicated in Figs. 1a and 2a, a circuit board 500, e.g. a flexible circuit board 500, may be electrically coupled to the first electrode 301. Moreover, a microchip 510 attached to the circuit board 500 may be configured to measure the capacitance of the first electrode as indicated above. Referring to Figs. 1a and 2a, the microchip 510 may be configured to send an output signal Sₒᵤₜ as indicated above. Referring to Fig. 5a, the microchip 510 and another chip 520 (hereinafter referred to as a computer 520) may be attached to the circuit board, and the computer 520 may be configured to send an output signal Sₒᵤₜ as indicated above. Moreover, the microchip 510 may send a signal Sᵢₙ to the computer 520 e.g. via a wire. The signal Sᵢₙ may be indicative of the first and second values v1 and v2.

However, comparison of these values with the first threshold th_{f} need not be done in microchip 510, but may be done in the computer 520. In addition, comparison of these signal value with the second threshold tht needs not be done in microchip 510, but may be done in the computer 520. However, preferably, comparison of signal value with the second threshold tht is done in the microchip 510. Thus, the signal Sᵢₙ needs not be indicative of absence of the object 600. Even if the microchip 510 may be configured to determine also a third value v3 that is below the second threshold v2 (see Fig. 4c2), the microchip 510 needs not to send such data to the second part of the electronic arrangement 120 (e.g. the computer 520). E.g. the microchip 510 may send the signal Sᵢₙ only when a signal as measured from the first electrode 301 at least equals the second threshold tht.

As indicated in Fig. 5b, the electronic arrangement 120 may comprise separate parts. For example, a first part of the electronic arrangement 120 may comprise a circuit board 500, e.g. a flexible circuit board 500, electrically coupled to the first electrode 301; and a microchip 510 attached to the circuit board 500. However, the microchip 510 may be configured to only determine the values v1, v2 (and optionally v3, v4, and v5) of the capacitance of the first electrode 301 and send a signal Sᵢₙ to a second part of the electronic arrangement 120. The signal Sᵢₙ is indicative of the values v1 and v2. Then, a second part of the electronic arrangement 120, such as a computer 520 may receive the signal Sᵢₙ and determine how the signal Sᵢₙ is indicative of a touch and a pressure following the principles indicated above. The second part (e.g. computer 520) may e.g. determine the values v1 and v2 from the signal Sᵢₙ and determine (a) that the value v1 is at most equal to the first threshold and at least equal to the second threshold thₜ and (b) that the second value v2 is more than the first threshold th_{f}. The signal Sᵢₙ may be sent to the computer 520 via a wire as in Fig. 5a or wirelessly, as in Fig. 5b.

When the second part of the electronic arrangement 120 (e.g. computer 520) is used, a computer program may run on the computer 520. Such a computer program, when run on the computer 520, is configured to cause the computer 520 to (a) receive information indicative of the first threshold th_{f}, (b) receive information indicative of the second threshold tht, and (c) receive a signal Sᵢₙ indicative of a first capacitance and a second capacitance measured by a capacitive layered sensor structure 110. The computer program, when run on the computer 520, is further configured: to cause the computer 520 to determine, from the signal Sᵢₙ a first value v1 indicative of the first capacitance and a second value v2 indicative of the second capacitance; to determine that the first value v1 is at most equal to the first threshold th_{f}; to determine that the second value v2 is more than the first threshold th_{f}; and to generate an output signal Sₒᵤₜ. The output signal Sₒᵤₜ is indicative of the first value v1 being at most equal to the first threshold th_{f} and the second value v2 being more than the first threshold th_{f}. Unlike the arrangement 100, the computer 520 needs not to determine that the first value v1 is at least equal to the second threshold tht, since such information may have been taken account in the signal Sᵢₙ as detailed above. Naturally, the computer program, when run on the computer 520, may be further configured: to cause the computer 520 to determine that the first value v1 is at least equal to the second threshold tht. Moreover, the output signal Sₒᵤₜ may be indicative of the first value v1 being at least equal to the second threshold tht.

As indicated above, the electronic arrangement 120 may be configured to send an output signal Sₒᵤₜ, wherein the output signal Sₒᵤₜ is also indicative of the second value v2. Correspondingly, the computer program, when run on the computer 520, may be configured to cause the computer 520 to generate such an output signal Sₒᵤₜ, that the output signal Sₒᵤₜ is also indicative of the second value v2.

As indicated above, the electronic arrangement 120, e.g. the microchip 510 and the computer 520 in combination, may be configured to determine also a third value v3 that is below the second threshold tht (see Fig. 4c2). Moreover, the microchip 510 may send such data to the second part of the electronic arrangement 120 (e.g. computer 520). The electronic arrangement 120, e.g. the microchip 510 and the computer 520 in combination, may be configured to determine also a fourth value v4 that is below the second threshold tht and above the detection limit th_{det}. (see Fig. 8a). The electronic arrangement 120, e.g. the microchip 510 and the computer 520 in combination, may be configured to determine also a fifth value v5 that is below the detection limit th_{det}. (see Fig. 8b).

Thus, an embodiment of a computer program, when run on the computer 520, is configured to cause the computer 520 to receive such a signal Sᵢₙ that is indicative of also a third capacitance measured by a capacitive layered sensor structure 110. Moreover, the embodiment of the computer program, when run on the computer 520, is configured to cause the computer 520 to determine from the signal Sᵢₙ a third value v3 indicative of the third capacitance; to determine that the first value v1 is at least equal to the second threshold tht; and to determine that the third value v3 is less than the second threshold tht.

An embodiment of a computer program, when run on the computer 520, is configured to cause the computer 520 to receive information indicative of the detection limit th_{det} and to receive such a signal Sᵢₙ that is indicative of also a fourth capacitance measured by a capacitive layered sensor structure 110. Moreover, the embodiment of the computer program, when run on the computer 520, is configured to cause the computer 520 to determine from the signal Sᵢₙ a fourth value v4 indicative of the fourth capacitance; and to determine that the fourth value v4 is less than the second threshold tht and more than the detection limit th_{det}.

An embodiment of a computer program, when run on the computer 520, is configured to cause the computer 520 to receive information indicative of the detection limit th_{det} and to receive such a signal Sᵢₙ that is indicative of also a fifth capacitance measured by a capacitive layered sensor structure 110. Moreover, the embodiment of the computer program, when run on the computer 520, is configured to cause the computer 520 to determine from the signal Sᵢₙ a fifth value v5 indicative of the fifth capacitance; and to determine that the fifth value v5 is less than the detection limit th_{det}.

Referring to Figs 7a to 7e, in an embodiment, the electrically permeable and conductive layer 410 comprises a conductive area 412 and a non-conductive area 414. As indicated in Fig. 7b, the electrically permeable and conductive layer 410 may comprise multiple non-conductive areas 414 (e.g. apertures or holes) separated from each other by parts of the conductive area 412. In a similar manner, the electrically permeable and conductive layer 410 may comprise multiple conductive areas 412 separated from each other by parts of the non-conductive area 414 (not shown). Referring to Fig. 7e, the conductive area 412 of the electrically permeable and conductive layer 410 may be a meandering line, whereby the electrically permeable and conductive layer 410 may comprise only one conductive area 412 and only one non-conductive area 414.

Referring to Figs. 7a to 7d, in a preferable embodiment, a conductive area 412 limits a non-conductive area 414 or non-conductive areas 414. In other words, in that embodiment, the conductive area 412 laterally surrounds a non-conductive area 414 or non-conductive areas 414. Thus, the non-conductive area 414 or non-conductive areas 414 form(s) an aperture or apertures to the conductive area 412. In a preferable embodiment, a cross sectional area A₄₁₄ of the non-conductive area 414 is from 0.01 (mm)² to 100 (mm)². Herein the unit (mm)² stands for square millimetre. In case there are multiple non-conductive areas, preferably, a cross sectional area A₄₁₄ of at least one of the non-conductive areas 414 is from 0.01 (mm)² to 100 (mm)². Herein the cross sectional area A₄₁₄ is an area of the cross section of the non-conductive area 414, wherein the cross section is defined on a plane having a normal to the direction Sz of thickness of the capacitive layered structure 110. The aforementioned area has been found to be sufficiently large for determining a touch caused by a finger of the user by the first electrode 301 through the electrically permeable and conductive layer 410. The aforementioned area has been found to be sufficiently small for sufficiently reducing disturbances to the capacitance of the first electrode 301. In particular, the aforementioned areas have been found suitable, regarding a total area of overlapping parts of first electrode 301 and the non-conductive area(s) 414. Referring to Figs. 7e and 7f, the conductive area 412 need not limit an aperture.

Preferably the non-conductive area 414 (or at least one such area 414) is arranged at a location of the first electrode 301. More specifically, preferably, the non-conductive area 414 or at least one of the non-conductive areas 414 overlaps with the first electrode 301. As above, also herein the term overlaps means that the overlapping parts are on top of each other in the direction Sz of thickness of the capacitive layered sensor structure 110.

Referring to Figs. 7a and 7b, the conductive area 412 and the non-conductive area(s) 414 may be manufactured e.g. by first forming a uniformly conductive layer 412, and then removing conductive material to form the non-conductive area(s) 414. More preferably, the conductive area 412 may be printed onto a non-conductive substrate 212 (Fig. 1d) by using conductive ink or paste in such a manner that the ink or the paste is not printed to the non-conductive area(s) 414. For example, conductive polymer-based material may serve as the material for the conductive area(s) 412. Such conductive polymer-based material typically comprises conductive particles. Such conductive particles may be particles of some metal (e.g. copper, aluminium, silver, gold) or carbon (including, but not limited to graphene and carbon nanotubes). In addition, conductive polymer-based materials include polyaniline, a polyvinyl (e.g. polyvinyl alcohol or polyvinyl chloride), and PEDOT:PSS (i.e. poly(3,4-ethylenedioxythiophene) polystyrene sulfonate), which may be used as the material for the conductive area(s) 412.

Referring to Fig. 7c, the conductive area 412 may be formed of conductive lines, filaments, or yarns crossing each other, whereby non-conductive areas 414 are arranged in between the conductive lines, filaments, or yarns. Referring to Fig. 7d, the electrically permeable and conductive layer 410 may be a woven layer (i.e. fabric) made of conductive yarn. Such conductive fabric includes the yarns as the conductive areas and non-conductive areas in between the yarns.

The non-conductive area 414 may be observable on a small scale. For example, a poorly conducting polymer-based layer may serve as the electrically permeable and conductive layer 410. Such poorly conductive polymer-based material typically comprises a reasonably small amount of conductive particles. Such conductive particles may be particles of some metal (e.g. copper, aluminium, silver, gold) or carbon (including, but not limited to graphene and carbon nanotubes). In addition, some (reasonably) conductive polymers, such as polyaniline, a polyvinyl, and PEDOT:PSS may comprise non-conductive areas in the microscale, depending on their conductivity. The amount of the particles correlates with conductivity, and the conductivity is low, yet the material is conductive, when the amount of particles is just above a percolation threshold of the particles. Thus, on a large scale, the material seems conductive, since the particles percolate, while, on a smaller scale, the material comprises areas that are not electrically connected to each other, i.e. they are non-conductive. In the non-conductive areas, the particles do not percolate. However, the conductive particles that are not connected to other conductive particles may hinder the electrical permeability of electrically permeable and conductive layer 410. Therefore, in a preferable embodiment, the non-conductive area 414 does not comprise particles of electrically conductive material.

Preferably, a ratio of the area of the non-conductive areas 414 and the area of the conductive area 412 is at a proper range. Thus, in an embodiment, the electrically permeable and conductive layer 410 comprises a conductive area 412 and at least one non-conductive area 414. The conductive area 412 may limit the non-conductive area(s) 414 as indicated above. This proper range applies preferably at least nearby the first electrode 301.

To this end, in an embodiment, at least a part of the conductive area 412 overlaps with the first electrode 301. The cross sectional area of the part of the conductive area 412 that overlaps with the first electrode 301 is denoted by A_{412,301} in Figs 7a and 7b. Moreover, at least a part of the at least one non-conductive area 414 overlaps with the first electrode 301. The cross sectional area of the part(s) of the non-conductive area(s) 414 that overlap(s) with the first electrode 301 is denoted by A_{414,301} in Figs. 7a and 7b. Herein the cross sectional areas A_{412,301} and A_{414,301} are areas of the cross section of the conductive area 412 and non-conductive area 414, respectively, overlapping with the first electrode 301, wherein the cross section is defined on a plane having a normal to the direction Sz of thickness of the capacitive layered structure 110.

Preferably, the cross sectional area A_{412,301} of the part of the conductive area 412 that overlaps with the first electrode 301 is at least 5 % of a cross sectional area A₃₀₁ of the first electrode. As for a maximum of the cross sectional area A_{412,301} of the part of the conductive area 412 that overlaps with the first electrode 301, the conductive area 412 may comprise only one aperture having a size within the aforementioned limits, while the first electrode 301 may be reasonably large. Thus, the upper limit may be at least approximately 100 %. Correspondingly, preferably, the cross sectional area A_{414,301} of the part of the non-conductive area(s) 414 that overlap(s) with the first electrode 301 may be at most 95 % of the cross sectional area A₃₀₁ of the first electrode 301.

Moreover, preferably, the cross sectional area A_{414,301} of the part(s) of the non-conductive area(s) 414 that overlap(s) with the first electrode 301 is from 0.01 (mm)² to 100 (mm)². This size range has been found suitable in particular for application where a touch and pressure of a finger of a user is determined.

If a second electrode 302 is present, preferably the conductive area(s) 412 and the non-conductive area(s) overlap with the second electrode 302 in a similar manner *mutatis mutandis.*

In an embodiment, the electrically permeable and conductive layer 410 comprises a conductive area 412 that limits (e.g. surrounds) a non-conductive area 414 or non-conductive areas 414, such that a cross sectional area A₄₁₂ of the conductive area is from 5 % to 95 % of a total cross sectional area A₄₁₂+A₄₁₄ of the conductive area 412 and the non-conductive area 414 or non-conductive areas 414 limited by (e.g. surrounded by) by the conductive area 412

Preferably, the electrode layer 300 comprises a second electrode 302 and a second wire 352 attached to the second electrode 302. This has the effect that the spatial accuracy of the capacitive measurements is improved. Preferably, the first wire 351 connects only the first electrode 301 to the electronic arrangement 120 and the second wire 352 connects only the second electrode 302 to the electronic arrangement 120. This has the effect that the capacitances of the first and second electrode 301, 302 can be measured without multiplexing, which improves the temporal accuracy of the measurements. Thus, in an embodiment, the electronic arrangement 120 is configured to measure a capacitance of the whole area of the first electrode 301 at one instance of time. Correspondingly, in an embodiment, the electronic arrangement 120 is not configured to measure capacitances of parts of the first electrode 301 at subsequent instances of time. However, the measurement principle can be applied also with such a layered sensor structure 110 wherein the first wire 351 connects both the first electrode 301 and the second electrode 302 to the electronic arrangement 120, and the electrode (301, 302), of which capacitance is measured, is determined by multiplexing. For using multiplexing, at least one of the electrically permeable and conductive layer 410 and the first electrically conductive layer 400 may be divided to areas that at least partly overlap with at least one of the first electrode 301 and the second electrode 302, wherein the areas of the layer (410, 400) are not electrically connected to each other.

As indicated above and in Figs. 1b and 2b, in an embodiment, the capacitive layered sensor structure 110 comprises a third insulating layer 230. The third insulating layer 230 is arranged such that the electrically permeable and conductive layer 410 is arranged in between the third insulating layer 230 and the first insulating layer 210 in the direction Sz of thickness of the capacitive layered sensor structure 110. A primary purpose of the third insulating layer 230 is to insulate the electrically permeable and conductive layer 410 from the object 600. This improves sensitivity of the measurements. A secondary purpose of the third insulating layer 230 is to act as a decorative layer. The capacitive layered sensor structure 110 may comprise the third insulating layer 230 even if it does not comprise the second insulating layer 220.

Referring to Fig. 6, the capacitive layered sensor structure 110 may further comprise a fourth insulating layer 240 and a second electrode layer 300b. The capacitive layered sensor structure 110 may comprise the fourth insulating layer 240 even if it does not comprise the third insulating layer e.g. of Fig. 1b. In such an embodiment, the fourth insulating layer 240 is arranged in between the first electrically conductive layer 400 and a second electrode layer 300b. In case the fourth insulating layer 240 is compressible and electrodes of the second electrode layer 300b overlap with electrodes of the first electrode layer 300, a capacitance of an electrode of the second electrode layer 300b is less affected by touch only. Therefore, such a structure can be used to measure pressure more accurately than e.g. the structure of Fig. 1b or 2b. However, the capacitive layered sensor structure 110 of Fig. 6 is more complex than the one of Fig. 1b or 2b, whereby it would be more expensive to manufacture.

As for the materials and thicknesses of the layers of the layered capacitive sensor structure 110, the materials and thicknesses are preferably selected such that the layered capacitive sensor structure 110 is flexible. More preferably, the materials and thicknesses are preferably selected such that the layered capacitive sensor structure 110 is flexible and stretchable, i.e. conformable.

As for the term flexible, a planar flexible material can be bent to a radius of curvature of 10 mm (or less) without breaking the material at a temperature of 20 °C. Moreover, the flexible material can be thereafter turned back to the planar form at a temperature of 20 °C without breaking the material. As for the term stretchable, a stretchable material can be stretched by at least 10 % in a reversible manner. In particular, a layer of stretchable material can be stretched by at least 10 % in a reversible manner a direction that is perpendicular to the direction of thickness of the layer. The reversibility of the stretching is spontaneous, i.e. elastic. Thus, a planar conformable material is flexible as indicated above and stretchable in a direction of the plane of the planar conformable material. A planar conformable material can be arranged to conform a surface of a hemisphere having a radius of 10 cm (or less) at a temperature of 20 °C without introducing significant plastic (i.e. irreversible) deformations to the material.

As for the term compressible, a compressible material can be compressed by at least 10 % in a reversible manner. In particular, a layer of compressible material can be compressed by at least 10 % in a reversible manner in the direction of the thickness of the layer. The reversibility of the compression is spontaneous, i.e. elastic. Moreover, a Young's modulus of a compressible layer may be less than 1 GPa.

As for suitable materials for the insulating layers 210, 220, 230, a purpose of the insulating layers is to electrically insulate. Therefore, a resistivity of a material of the first insulating layer 210 and a material of the second insulating layer 220 (if present) may be at least 10 Ωm at a temperature of 23 °C. This applies also for the third insulating layer 230, if present. Typically, a resistivity of a material of the first insulating layer 210 and a material of the second insulating layer 220 (if present) is at least 100 Ωm at a temperature of 23 °C As indicated above, at least one of the first and second insulating layers 210, 220 is compressible; however the second insulating layer 220 needs not be present in the solution. The meaning of the term compressible has been discussed above. Suitable materials for a compressible layer include materials from a material group A, wherein the material group A consists of polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylenebutylene-styrene ethylene propylene rubber, neoprene, cork, latex, natural rubber, siloxane polymer (such as silicone), and thermoplastic elastomeric gel. Moreover, in order to have reasonable deformations, in an embodiment, a thickness of the compressible layer (210 and/or 220) is at least 0.05 mm, preferably at least 0.3 mm such as at least 0.5 mm. A thickness of the compressible layer (210 and/or 220) is preferably from 0.05 mm to 5 mm, such as from 0.3 mm to 4 mm, such as from 0.5 mm to 2 mm. A Young's modulus in compression of the compressible layer is preferably from 0.01 MPa to 15 MPa, such as from 0.1 MPa to 5 MPa. A Young's modulus in tension may differ from the Young's modulus in compression. Moreover, a material of the compressible layer has preferably a yield strain of at least 10 per cent. This ensures that the material can be sufficiently compressed in use.

Preferably, the first insulating layer 210 and the second insulating layer 220 are flexible in the aforementioned sense. Moreover, preferably, a Young's modulus of the first insulating layer 210 is at most 10 GPa, such as at most 5.0 GPa. Moreover, preferably, a Young's modulus of the second insulating layer 220 is at most 10 GPa, such as at most 5.0 GPa.

The first insulating layer 210 or the second insulating layer 220 may act only as a flexible insulator. Suitable materials for a flexible layer include materials from a material group B, wherein the material group B consists of textile, polyimide, polyethylene naphthalate, polyethylene terephthalate, and polyetheretherketone. Suitable materials for a flexible layer also include materials from the material group A as defined above. However, the first insulating layer 210 or the second insulating layer 220 need not be flexible. In such a case, suitable materials further include epoxy and phenolic resin. Examples include FR-4 glass epoxy and cotton paper impregnated with phenolic resin. In particular, the second insulating layer 220 may be hard and/or stiff, if the sensor structure 110 needs not be flexible, and the first insulating layer 210 is compressible.

A thickness of an insulating layer that does not act as a compressible layer may be e.g. up to 5 mm as indicated above. However a thickness of an insulating layer that does not act as a compressible layer may be e.g. less 1 mm, such as less than 0.5 mm, e.g. from 50 µm to 1 mm or from 50 µm to 0.5 mm.

What has been said about the thicknesses and materials of the first and second insulating layers 210, 220 applies to the third insulating layer 230. The third insulating layer 230 needs not to be compressible.

As for the electrode layer 300, preferably also the electrode layer is flexible. More preferably flexible and stretchable.

In an embodiment, the first electrode 301 is made of such material that is stretchable by at least 5 % without breaking. Preferably the second electrode 302 is made of such material that is stretchable by at least 5 % without breaking. Such material may be e.g. ink or paste. In an embodiment, the first electrode 301 comprises electrically conductive particles, such as flakes or nanoparticles, attached to each other in an electrically conductive manner. In an embodiment, the first electrode 301 comprises electrically conductive particles comprising at least one of carbon (including, but not limited to graphene and carbon nanotubes), copper, silver, and gold. In an embodiment, the first electrode 301 comprises electrically conductive particles comprising carbon. In an embodiment, the first electrode 301 comprises electrically conductive polymer-based material, such as at least one of polyaniline, a polyvinyl (e.g. polyvinyl alcohol or polyvinyl chloride), and PEDOT:PSS (i.e. poly(3,4-ethylenedioxythiophene) polystyrene sulfonate). What has been said about the material of the first electrode 301 applies, in an embodiment, to all electrodes including the second electrode 302. What has been said about the material of the first electrode 301 applies, in an embodiment, to the first wire 351. What has been said about the material of the first electrode 301 applies, in an embodiment, to the second wire 352.

The first electrode 301 may be arranged (e.g. by printing) onto the first insulating layer 210 or the second insulating layer 220 (see Figs. 1c and 2c). In the alternative, the first electrode 301 may be arranged (e.g. by printing) onto a substrate 390 (see Figs. 1a and 2a). What has been said about the material of the insulating layers 210, 220 applies to the substrate 390.

As for the first electrically conductive layer 400, the first electrically conductive layer 400 may be uniformly conductive, e.g. made using conductive ink or paste a uniform amount on a uniform surface. In the alternative, the first electrically conductive layer 400 may be a mesh of conductive yarns, e.g. made using conductive ink or paste or filaments. It may also suffice that the first electrically conductive layer 400 consists of a meandering electrically conductive line. It may also suffice that the first electrically conductive layer 400 comprises multiple separate electrically conductive lines. In an embodiment, at least a part of the first electrically conductive layer 400 is made from a conductive ink. In an embodiment the first electrically conductive layer 400 comprises electrically conductive fabric. In an embodiment, the first electrically conductive layer 400 comprises electrically conductive polymer. Preferably, the first electrically conductive layer 400 is uniformly conductive. As for the term conductive, a conductive material has a resistivity of at most 10 Ωm, measured at a temperature of 23 °C and at an internal elastic strain of 0 %; i.e. without compression or tension, i.e. at rest.

What has been said about the material of the first electrically conductive layer 400 applies to the material of the electrically permeable and conductive layer 410, in particular to the conductive area(s) 412 of the electrically permeable and conductive layer 410. However, at least one non-conductive area 414 may be arranged to the electrically permeable and conductive layer 410 at least if its conductivity would be otherwise uniform and high.

Moreover, preferably [A] a conductivity of the first electrically conductive layer 400 at a temperature of 23 °C (at rest) is higher than a conductivity of the electrically permeable and conductive layer 410 at a temperature of 23 °C (at rest) and/or [B] a greater portion of the first electrically conductive layer 400 than of the electrically permeable and conductive layer 410 is covered by conductive material.

## Claims

1. An arrangement (100) for capacitively detecting pressure and at least one of touch and presence in a vicinity, the arrangement (100) comprising
- a capacitive layered sensor structure (110) comprising
• an electrically permeable and conductive layer (410),
• an electrode layer (300) comprising a first electrode (301), and
• a first insulating layer (210) arranged in between the electrically permeable and conductive layer (410) and the electrode layer (300), the capacitive layered sensor structure (110) comprising or further comprising
• an insulating layer (210, 220) that is compressible and that is arranged in between the electrode layer (300) and an electrically conductive layer (410, 400); the arrangement (100) comprising
- an electronic arrangement (120) electrically coupled to the first electrode (301), the electronic arrangement (120) being configured to
• at a first instance of time (t1), measure a first value (v1) indicative of a first capacitance of the first electrode (301),
• at a second instance of time (t2), measure a second value (v2) indicative of a second capacitance of the first electrode (301),
• determine that the first value (v1) is at most equal to a first threshold (th_{f}) and at least equal to a second threshold (tht), and
• determine that the second value (v2) is more than the first threshold (th_{f}).

2. The arrangement of the claim 1, wherein the electrically permeable and conductive layer (410) comprises
- [A] a conductive area (412) and [B] a non-conductive area (414) or non-conductive areas (414), wherein
- at least one of the non-conductive areas (414) overlaps with the first electrode (301), and
- a cross sectional area (A_{414,301}) of the part(s) of the non-conductive area(s) (414) that overlap(s) with the first electrode (301) is from 0.01 (mm)² to 100 (mm)².

3. The arrangement of claim 1 or 2, wherein the electrically permeable and conductive layer (410) comprises
- a conductive area (412) of which at least a part overlaps with the first electrode (301) and
- a non-conductive area (414) or non-conductive areas (414) of which at least a part overlap with the first electrode (301), wherein
- a cross sectional area (A_{412,301}) of the part of the conductive area (412) that overlaps with the first electrode (301) is at least 5 % of a cross sectional area (A₃₀₁) of the first electrode (301).

4. The arrangement of claim 2 or 3, wherein
- the conductive area (412) surrounds a non-conductive area (414) or non-conductive areas (414).

5. The arrangement (100) of any of the claims 1 to 4, wherein
- the first insulating layer (210) is compressible.

6. The arrangement (100) of any of the claims 1 to 5, wherein
- the capacitive layered sensor structure (110) comprises a second insulating layer (220) such that
- the electrode layer (300) is arranged in between the first insulating layer (210) and the second insulating layer (220);
in an embodiment,
- the second insulating layer (220) is compressible.

7. The arrangement (100) of claim 6, wherein
- the capacitive layered sensor structure (110) comprises a first electrically conductive layer (400) such that
- the second insulating layer (220) is arranged in between the electrode layer (300) and the first electrically conductive layer (400);
preferably,
- the second insulating layer (220) is compressible;
preferably,
- the electronic arrangement (120) is electrically coupled to the first electrically conductive layer (400).

8. The arrangement (100) of any of the claims 1 to 7, wherein the electronic arrangement (120) is configured to send an output signal (Sₒᵤₜ), the output signal (Sₒᵤₜ) being indicative of
• the first value (v1) being in between the second threshold (tht) and the first threshold (th_{f}), and
• the second value (v2) being above the first threshold (th_{f});
preferably the output signal (Sₒᵤₜ) is also indicative of the second value (v2).

9. The arrangement (100) of any of the claims 1 to 8, wherein the capacitive layered sensor structure (110) and the electronic arrangement (120) are, in combination, configured in such a way that
- when an object (600) having a volume of at least 1 (cm)³ and a dielectric constant of at least 10 is arranged in the vicinity of the first electrode (301) or touches a surface of the capacitive layered sensor structure (110) at such a location (L) that overlaps with the first electrode (301) such that a part of the first insulating layer (210) and a part of the electrically permeable and conductive layer (410) are arranged in between the object (600) and the first electrode (301) and the first insulating layer (210) is not compressed, a value indicative of the capacitance of the first electrode (301) as measurable from the capacitive layered sensor structure (110) by the electronic arrangement (120) is at most equal to the first threshold (th_{f}) and at least equal to the second threshold (tht), and
- at least one of the first and a second insulating layer (210, 220) is compressible by the object (600) such that a value indicative of the capacitance of the first electrode (301) as measurable from the capacitive layered sensor structure (110) by the electronic arrangement (120) is more than the first threshold (th_{f}).

10. The arrangement of any of the claims 1 to 9, wherein the capacitive layered sensor structure (110) and the electronic arrangement (120) are, in combination, configured in such a way that
- when an object (600) having a volume of at least 1 (cm)³ and a dielectric constant of at least 10 is not arranged in the vicinity of the first electrode (301), a value indicative of the capacitance of the first electrode (301) as measurable from the capacitive layered sensor structure (110) by the electronic arrangement (120) is less than the second threshold (tht).

11. The arrangement of any of the claims 1 to 10, wherein
[A]
- the electronic arrangement (120) is electrically coupled to the electrically permeable and conductive layer (410) and/or
[B]
- the electrode layer (300) comprises a second electrode (302) and a second wire (352) attached to the second electrode (302).

12. The arrangement of any of the claims 1 to 11, comprising
- a third insulating layer (230), arranged such that the electrically permeable and conductive layer (410) is arranged in between the third insulating layer (230) and the first insulating layer (210).

13. A method for detecting a pressure and at least one of touch and presence in a vicinity, the method comprising
- arranging available a capacitive layered sensor structure (110) comprising
• an electrically permeable and conductive layer (410),
• an electrode layer (300) comprising a first electrode (301), and
• a first insulating layer (210) arranged in between the electrically permeable and conductive layer (410) and the electrode layer (300), the capacitive layered sensor structure (110) comprising or further comprising
• an insulating layer (210, 220) that is compressible and that is arranged in between the electrode layer (300) and an electrically conductive layer (410, 400);
the method comprising
- measuring a first value (v1) indicative of a first capacitance of the first electrode (301) using the capacitive layered sensor structure (110),
- measuring a second value (v2) indicative of a second capacitance of the first electrode (301) using the capacitive layered sensor structure (110), and
- determining
∘ that the first value (v1) is at most equal to a first threshold (th_{f}) and at least equal to a second threshold (tht) and
∘ that the second value (v2) is more than the first threshold (th_{f}).

14. The method of claim 13, wherein
- the first value (v1) is measured using the capacitive layered sensor structure (110) when an object (600) having a volume of at least 1 (cm)³ and a dielectric constant of at least 10 is arranged in the vicinity of the first electrode (301) or touches a surface of the capacitive layered sensor structure (110) at such a location (L) that overlaps with the first electrode (301) such that a part of the first insulating layer (210) and a part of the electrically permeable and conductive layer (410) are arranged in between the object (600) and the first electrode (301) and the first insulating layer (210) is not compressed, and
- the second value (v2) is measured using the capacitive layered sensor structure (110) when the object (600) is compressing the first insulating layer (210) and/or a second insulating layer (220) in the vicinity of the first electrode (301) such that a part of the first insulating layer (210) and a part of the electrically permeable and conductive layer (410) are arranged in between the object (600) and the first electrode (301).

15. A computer program that, when run on a computer (520), is configured to cause the computer (520) to
- receive information indicative of a first threshold (th_{f}) and
- receive an input signal (Sᵢₙ) indicative of a first capacitance and a second capacitance measured by a capacitive layered sensor structure (110),
- determine from the input signal (Sᵢₙ) a first value (v1) indicative of the first capacitance and a second value (v2) indicative of the second capacitance,
- determine that the first value (v1) is at most equal to the first threshold (th_{f}),
- determine that the second value (v2) is more than the first threshold (th_{f}), and
- generate an output signal (Sₒᵤₜ), wherein
- the output signal (Sₒᵤₜ) is indicative of the first value (v1) being at most equal to the first threshold (th_{f}) and the second value (v2) being more than the first threshold (th_{f}).
